# EUROPEAN PATENT APPLICATION

(11) **EP 2 325 286 A1**
(43) Date of publication of application: **25.05.2011**
(21) Application number: 09811455.6
(22) Date of filing: 28.08.2009
(51) Int. Cl.: C10J 3/46

(54) **GASIFICATION FURNACE APPARATUS**

(30) Priority: 08.09.2008 JP 2008229520
(71) Applicant: Mitsubishi Heavy Industries, Ltd., Tokyo 108-8215 (JP)
(72) Inventor: TAKASE, Soken, Nagasaki-shi Nagasaki 851-0392 (JP); OTA, Katsuhiro, Tokyo 108-8215 (JP); ISHII, Hiromi, Tokyo 108-8215 (JP); KIJIMA, Takashi, Yokohama-shi Kanagawa 231-8715 (JP)
(74) Representative: Bongiovanni, Simone
(86) International application number: PCT/JP2009/065078
(87) International publication number: WO 2010/026929

(57) **Abstract**

Provided is a gasification furnace apparatus equipped with a supply source of low-oxygen-concentration drying gas that does not require fuel. A coal pulverizer (1) that produces pulverized coal by pulverizing coal, an air separator (3) that separates air into oxygen gas and nitrogen gas, and a gasification furnace (2) that produces product gas by introducing thereinto the pulverized coal, oxygen, and gas, are included. By receiving a supply of excess nitrogen gas from the air separator (3), the air diluted with nitrogen is used as a source of low-oxygen-concentration gas for drying the pulverized coal, and an air heater (5) that heats the source of low-oxygen-concentration gas to a temperature at which drying can be performed is provided.

## Description

### Technical Field

The present invention relates to a gasification furnace apparatus that is applied to, for example, a chemical gasification furnace that produces product gas for chemical synthesis from pulverized coal.

### Background Art

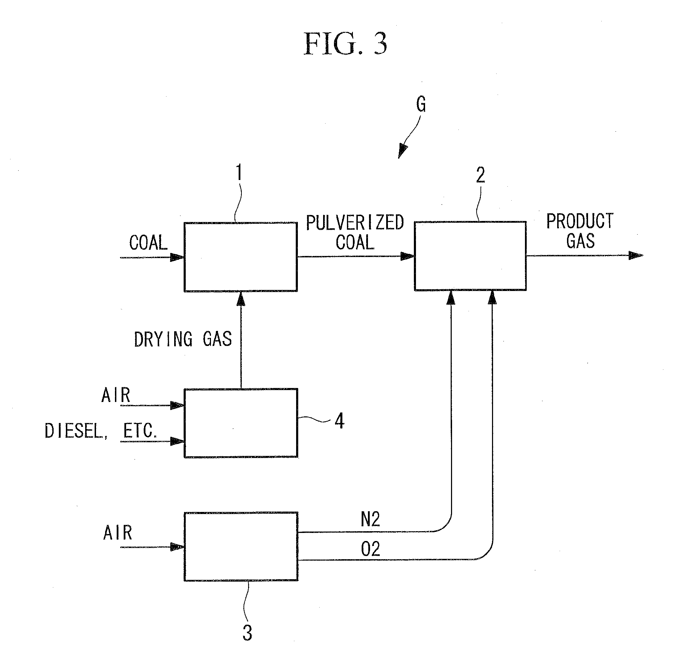

In addition to a chemical gasification furnace that produces product gas for chemical synthesis, known gasification furnace apparatuses that produce gas using pulverized coal as raw material include, for example, gasification furnaces that produce fuel gas for gas turbines used at integrated gasification combined cycle power plants (for example, see Patent Literature 1).
In a conventional gasification furnace apparatus G shown in Fig. 3, pulverized coal obtained by pulverizing coal, which is the raw material, with a coal pulverizer 1 is supplied to a gasification furnace 2. At the gasification furnace 2, product gas, which is gasified pulverized coal, is produced by receiving a supply of nitrogen and oxygen from an air separator 3, in addition to the pulverized coal.
Note that, at the coal pulverizer 1, drying gas is required when producing the pulverized coal; therefore, for example, as in the gasification furnace apparatus G shown in Fig. 3, the drying gas required for pulverized coal production is obtained by providing a combustion furnace 4 or the like.

### Citation List

### Patent Literature

{PTL 1} Japanese Unexamined Patent Application, Publication No. Sho 61-175241.

### Summary of Invention

### Technical Problem

Incidentally, in the conventional gasification furnace apparatus G described above, when using generally highly pyrophoric, low-grade coal, for example, subbituminous coal, brown coal, and so on, as raw material, the oxygen concentration of the drying gas is controlled at or below 13 vol% to prevent spontaneous combustion.
In an air-blown integrated gasification combined cycle power generator, gas turbine exhaust gas having an oxygen concentration of 12 vol% is used as the drying gas described above. In this case, the temperature of the gas turbine exhaust gas used as the drying gas is adjusted to an optimal temperature by mixing it with exhaust gas at an exhaust-gas boiler inlet/outlet.

In addition, in an oxygen-blown gasification furnace apparatus that produces product gas for chemical synthesis, there in no suitable source of low-oxygen-concentration gas for the drying gas; therefore, for example, in the combustion furnace 4 shown in Fig. 3, fuel such as diesel, natural gas, or the like is combusted to generate combustion gas. That is, the combustion furnace 4 is required for the chemical gasification furnace, and the combustion gas generated at this combustion furnace 4 is used as high-temperature, low-oxygen-concentration drying gas. However, because generating the combustion gas using the combustion furnace 4 requires fuel to produce low-oxygen-concentration drying gas, it is disadvantageous in terms of running costs.
Against such a background, with a gasification furnace apparatus equipped with a coal pulverizer that obtains pulverized coal by pulverizing low-grade coal, it is desirable to have a supply source of low-oxygen-concentration drying gas that requires no fuel.
The present invention has been conceived in light of the above-described circumstances, and an object thereof is to provide a gasification furnace apparatus equipped with a supply source of low-oxygen-concentration drying gas that requires no fuel.

### Solution to Problem

The present invention employs the following solutions in order to solve the above-described problems.
A gasification furnace apparatus according to an aspect of the present invention includes a coal pulverizer that produces pulverized coal by pulverizing coal; an air separator that separates air into oxygen gas and nitrogen gas; and a gasification furnace into which the pulverized coal, the oxygen, and gas are introduced to produce product gas, wherein, by receiving a supply of excess nitrogen gas from the air separator, the air diluted with nitrogen is used as a source of low-oxygen-concentration gas for drying the pulverized coal, and a heater that heats the source of low-oxygen-concentration gas to a temperature at which drying can be performed is provided.

In the gasification furnace apparatus described above, the coal pulverizer that produces the pulverized coal by pulverizing coal, the air separator that separates air into oxygen and gas, and the gasification furnace that produces the product gas by introducing the pulverized coal, oxygen gas, and nitrogen gas are provided; by receiving the supply of excess nitrogen gas from the air separator, air diluted with nitrogen is used as the source of low-oxygen-concentration gas for drying the pulverized coal; and the heater that heats the source of low-oxygen-concentration gas to the temperature at which drying can be performed is provided. Therefore, by effectively using the existing devices, the low-oxygen-concentration gas for drying the pulverized coal can be obtained without requiring fuel.

In the gasification furnace apparatus described above, the heater preferably performs heat exchange between the vapor whose temperature is raised upon passing through the gasification furnace and the source of low-oxygen-concentration gas to achieve the temperature at which drying can be performed; accordingly, the temperature of the source of low-oxygen-concentration gas can be raised to a temperature at which drying can be performed by effectively using the heat held by the gasification furnace.

In the gasification furnace apparatus described above, the heater preferably is the gasification furnace, which raises the temperature of the excess nitrogen gas that passes therethrough; accordingly, because air is consequently diluted by the high-temperature excess nitrogen gas, the temperature of the source of low-oxygen-concentration gas can be raised to a temperature at which drying can be performed by effectively using the heat held by the gasification furnace.

### Advantageous Effects of Invention

According to the present invention described above, by effectively using the excess portion of nitrogen gas generated in the air separator for use in the gasification furnace and by effectively using heat held by the gasification furnace in addition thereto, it is possible to obtain low-oxygen-concentration gas for drying pulverized coal, which requires no fuel for obtaining combustion gas. As a result, in a gasification furnace apparatus, such as a chemical gasification furnace, etc. equipped with a coal pulverizer that obtains pulverized coal by pulverizing highly pyrophoric, low-grade coal, the low-oxygen-concentration drying gas, which is required when producing the pulverized coal, can be obtained without providing a combustion furnace that generates combustion gas using fuel.

### Brief Description of Drawings

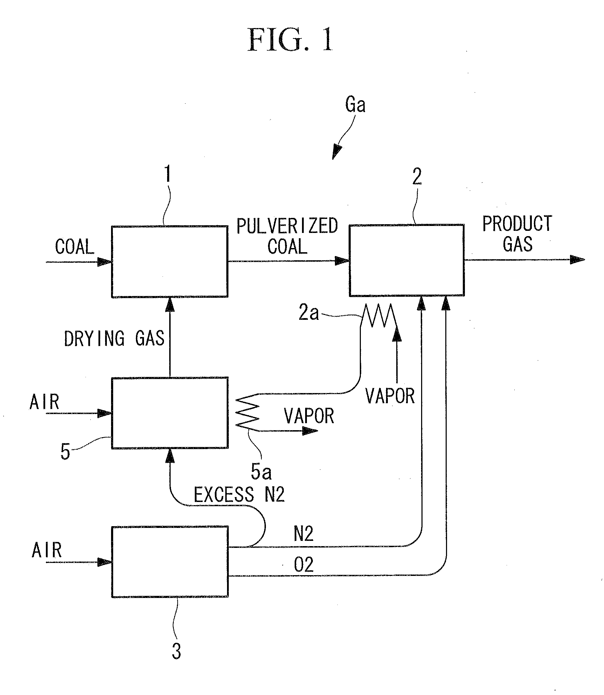

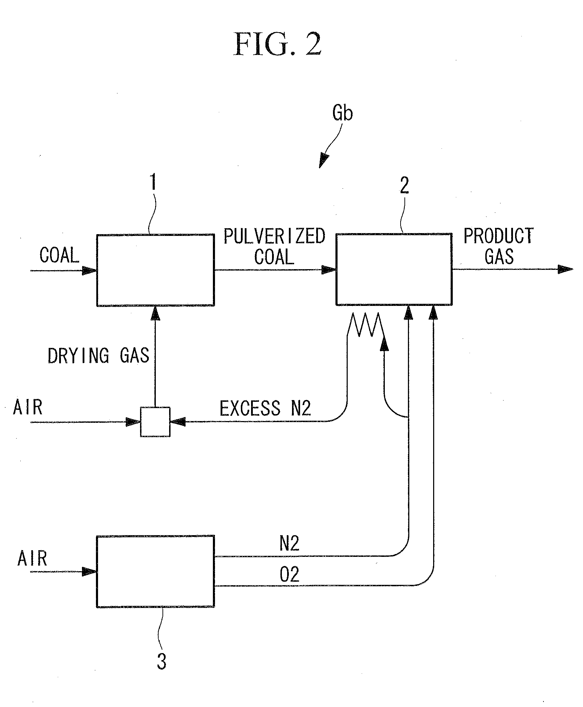

{Fig. 1} Fig. 1 is a configuration diagram showing an embodiment of a gasification furnace apparatus according to the present invention.
{Fig. 2} Fig. 2 is a configuration diagram showing a modification of the gasification furnace apparatus shown in Fig. 1.
{Fig. 3} Fig. 3 is a configuration diagram showing a conventional gasification furnace apparatus.

### Description of Embodiments

An embodiment of a gasification furnace apparatus according to the present invention will be described below on the basis of the drawings.
A gasification furnace apparatus Ga shown in Fig. 1 is an oxygen-blown chemical gasification furnace that produces product gas for chemical synthesis, using generally highly pyrophoric, low-grade coal, for example, subbituminous coal, brown coal, and so on, as raw material.
The illustrated gasification furnace apparatus Ga is provided with a coal pulverizer 1 that produces pulverized coal by pulverizing coal, such as low-grade coal, etc.; an air separator 3 that separates air into oxygen (O₂) gas and nitrogen (N₂) gas; and a gasification furnace 2 that produces product gas by introducing the pulverized coal produced by the coal pulverizer 1 and the oxygen gas and nitrogen gas separated at the air separator 3.

The coal pulverizer 1 is a device that uses highly pyrophoric, low-grade coal as raw material and produces pulverized coal by pulverizing the raw material in an environment into which low-oxygen-concentration drying gas has been introduced. The low-oxygen-concentration drying gas used here has a low oxygen concentration, at or below 13 vol%, and a high gas temperature of about 200 to 350 °C.
The gasification furnace 2 is an oxygen-blown furnace into which the pulverized coal, oxygen gas, and nitrogen gas are introduced and produces product gas by combusting the pulverized coal. Note that, nitrogen in this case is introduced as needed.
The air separator 3 is a device into which air is introduced from the atmosphere, that separates it into oxygen gas and nitrogen gas, and that supplies them to the gasification furnace 2.

The above-described coal pulverizer 1 requires low-oxygen-concentration gas for drying the pulverized coal and, by receiving a supply of excess nitrogen gas from the air separator 2, uses air diluted with nitrogen as the source of this low-oxygen-concentration gas. Because the air used here is introduced from the atmosphere, the temperature thereof is low, and moreover, to be used as drying gas, the temperature of excess nitrogen gas is also low. As a result, with regard to the low-oxygen-concentration drying gas, which is the air diluted with the excess nitrogen gas, the temperature thereof needs to be increased to a desired temperature to be suitable for drying gas.
Therefore, the gasification furnace apparatus Ga is provided with an air heater 5 as a heater for raising the temperature of the drying gas. This air heater 5 is a heat exchanger that performs heat exchange between the drying gas at the source of the low-oxygen-concentration gas in which the air and the excess nitrogen gas are mixed at a desired proportion and the vapor whose temperature is raised upon passing through the gasification furnace 2, to thereby raise the temperature of the drying gas. In the illustrated configuration, a heat exchange portion 2a of the gasification furnace 2 absorbs heat, and the heat is radiated at a heat exchange portion 5a of the air heater 5. Note that, with regard to the vapor used at the air heater 5 for heating, the supply source thereof is not particularly limited.

In the thus-configured gasification furnace apparatus Ga, because low-oxygen-concentration air diluted with the excess nitrogen gas, whose supply is received from the air separator 3, is used as the source of the low-oxygen-concentration gas for drying the pulverized coal and, furthermore, because the air heater 5 that heats the low-oxygen-concentration drying gas with the vapor whose temperature is raised with the heat held by the gasification furnace 2 is provided, by effectively using the gasification furnace 2 and the air separator 3, which are existing devices, the low-oxygen-concentration gas for drying the pulverized coal can be obtained without requiring fuel consumption.
That is, because the air heater 5 heats the low-temperature drying gas to the temperature at which drying can be performed, without combusting fuel, by performing heat exchange between the vapor whose temperature is raised upon passing through the gasification furnace 2 and the low-temperature drying gas, high-temperature drying gas can be obtained by effectively using the heat held by the gasification furnace 2. In other words, because the excess nitrogen gas generated at the air separator 3 is effectively used for diluting the oxygen concentration of the air and, furthermore, because heat generated at the gasification furnace 2 due to production of the product gas is effectively used for raising the temperature of the drying gas, the air heater 5, which is a simple heat exchanger that consumes no fuel, can be employed instead of the combustion furnace 4 that generates combustion gas, which serves as high-temperature low-oxygen-concentration drying gas, by consuming fuel.

Next, a modification of the embodiment of the above-described gasification furnace apparatus Ga will be described on the basis of Fig. 2. Note that, the same reference signs are given to the portions similar to the above-described embodiment, and a detailed description thereof will be omitted.
In a gasification furnace apparatus Gb of the modification shown in Fig. 2, instead of the air heater 5 that uses the vapor as a heating medium, serving as the heater for raising the temperature of the drying gas to a desired temperature at which drying can be performed, the excess nitrogen gas supplied from the air separator 3 is guided to the gasification furnace 2, and the excess nitrogen gas is directly heated by the heat held by the gasification furnace 2 to raise the temperature thereof. That is, the heater in this case is the gasification furnace 2 that raises the temperature of the excess nitrogen gas that passes therethrough, and the oxygen concentration is diluted by mixing the high-temperature excess nitrogen gas and the low-temperature air; therefore, the temperature of the low-oxygen-concentration gas can be raised to the temperature at which drying can be performed by effectively using the heat held by the gasification furnace 2. In other words, the gasification furnace 2 is configured to include a heat exchange portion 2b for heating the excess nitrogen gas.

In the thus-configured gasification furnace Gb, the excess nitrogen gas generated at the air separator 3 is effectively used for diluting the oxygen concentration of the air; furthermore, the heat generated at the gasification furnace 2 due to production of the product gas is effectively used for directly heating the excess nitrogen gas, and the temperature of the drying gas is raised to a usable temperature by mixing the excess nitrogen gas and the air. Therefore, high-temperature, low-oxygen-concentration drying gas can be ensured without consuming fuel.

In this way, in the gasification furnace apparatuses Ga and Gb of the present invention described above, because the excess amount of nitrogen gas generated at the air separator 3 for producing the product gas at the gasification furnace 2 is used effectively and, furthermore, because the heat held by the gasification furnace 2 is also effectively used, the low-oxygen-concentration gas for drying the pulverized gas can be obtained without requiring fuel. As a result, in the gasification furnace apparatuses Ga and Gb equipped with the coal pulverizer 1 that obtains the pulverized coal by pulverizing highly pyrophoric, low-grade coal, the low-oxygen-concentration drying gas, which is required when producing the pulverized coal, can be obtained without having to provide the combustion furnace 4 that generates combustion gas by using fuel.

Incidentally, in the above-described embodiment, although the gasification furnace apparatuses Ga and Gb have been described as being chemical gasification furnace apparatuses, the present invention is not limited thereto, and it should be naturally appreciated that application to other types of gasification furnace apparatuses without sources of low-oxygen-concentration drying gas is possible.
Note that, the present invention is not limited to the above-described embodiment, and appropriate alterations are permissible within a range that does not depart from the gist of the present invention.

### Reference Signs List

- 1: Coal pulverizer
- 2: Gasification furnace
- 3: Air separator
- 5: Air heater
- Ga, Gb: Gasification furnace apparatus

## Claims

1. A gasification furnace apparatus comprising:
a coal pulverizer that produces pulverized coal by pulverizing coal;
an air separator that separates air into oxygen gas and nitrogen gas; and
a gasification furnace into which the pulverized coal, the oxygen, and gas are introduced to produce product gas,
wherein, by receiving a supply of excess nitrogen gas from the air separator, the air diluted with nitrogen is used as a source of low-oxygen-concentration gas for drying the pulverized coal, and a heater that heats the source of low-oxygen-concentration gas to a temperature at which drying can be performed is provided.

2. A gasification furnace apparatus according to Claim 1, wherein the heater performs heat exchange between the vapor whose temperature is raised upon passing through the gasification furnace and the source of low-oxygen-concentration gas to achieve the temperature at which drying can be performed.

3. A gasification furnace apparatus according to Claim 1, wherein the heater is the gasification furnace, which raises the temperature of the excess nitrogen gas that passes therethrough.
